# EUROPÄISCHE PATENTSCHRIFT

(11) **EP 0 626 523 B1**
(45) Veröffentlichungstag und Bekanntmachung des Hinweises auf die Patenterteilung: **11.12.1996**
(21) Anmeldenummer: 94102040.6
(22) Anmeldetag: 10.02.1994
(51) Int. Cl.: F16D 3/68, F16D 3/70

(54) **Zweistufige elastische Wellenkupplung**
Two-stage flexible coupling
Accouplement élastique étagé à deux niveaux

(30) Priorität: 26.03.1993 DE 4309745
(43) Veröffentlichungstag der Anmeldung: 30.11.1994
(73) Patentinhaber: CENTA-ANTRIEBE KIRSCHEY GmbH, D-42781 Haan (DE)
(72) Erfinder: Kirschey, Gerhard, Dipl.-Ing., D-42329 Wuppertal (DE)
(74) Vertreter: Patentanwälte Ostriga & Sonnet

(56) Entgegenhaltungen:
- DE-A- 1 600 055
- DE-A- 2 630 506
- DE-U- 9 304 497
- GB-A- 1 021 379
- US-A- 2 182 387

## Beschreibung

Die Erfindung bezieht sich auf eine zweistufige drehelastische Wellenkupplung nach dem Oberbegriff des Anspruchs 1.

Eine solche Wellenkupplung ist aus einer Presseveröffentlichung (US-Zeitschrift "High Speed Diesels and Drives", Sept. 1992) der amerikanischen Firma MerCruiser bekannt. Sie wurde konstruiert, um insbesondere im Leerlauf des Antriebs oder bei geringer Teillast entstehende Geräusche (das sogenannte "gear hammering") zu vermindern. Solche Geräusche entstehen insbesondere dann, wenn eine Kupplung für derartige Lastverhältnisse nicht drehweich genug ausgelegt ist. Bei der zweistufigen MerCruiser-Wellenkupplung ist der Kupplungsflansch über einen elastischen, relativ drehweich eingestellten Gummiringkörper mit der Nabe verbunden. Das vom Schwungrad des Bootsmotors auf den Kupplungsflansch übertragende Drehmoment wird also über diesen gummielastischen Ring auf die Nabe übertragen, mit der die Getriebewelle drehfest gekuppelt ist. Im Leerlauf und bei niedrigen Motordrehzahlen ist als elastisches Kupplungselement zunächst allein der Gummiring in den Kraftfluß eingeschaltet.

Mit der Nabe ist sodann ein Teller- oder scheibenartiges, sekundäres Kraftübertragungsglied fest verbunden, welches zu einer Seite der Kupplungsanordnung angeordnet ist. Dieses Kraftübertragungsglied trägt sechs sich in Axialrichtung erstreckende Zapfen mit darauf aufgesteckten gummielastischen Hülsen, die drehsteifer sind als das erstgenannte gummielastische Ringelement. Die Zapfen mit den Hülsen greifen in sich über jeweils Teilbereiche des Umfangs hinwegerstreckende Längsausnehmungen innerhalb des Kupplungsflansches ein. Solange das Antriebsmoment im Leerlaufbereich oder bei geringer Teillast verbleibt, können die Zapfen mit den elastischen Hülsen in diesen Längsausnehmungen frei oszillieren, ohne an die Berandungen der Längsausnehmungen anzustoßen. Bei einer Erhöhung des Antriebsdrehmoments und größeren Umfangsverlagerungen der Kupplungsteile zueinander reicht die Rückstellkraft des gummielastischen Ringes allein nicht mehr aus, so daß nun eine größere Relativbewegung in Umfangsrichtung zwischen dem Kupplungsflansch und der Nabe und somit folglich auch zwischen den mit den gummielastischen Hülsen versehenen Bolzen und den Längsausnehmungen im Kupplungsflansch eintreten. Aufgrund der größeren Winkelwege gelangen nun die gummielastischen Hülsen an die in Drehrichtung des Kupplungsflansches weisenden Berandungen der Längsausnehmungen und damit in kraft- bzw. drehmomentübertragende Funktion.

Eine derartige zweistufige drehelastische Kupplung zeigt eine Dämpfungskennlinie, die im Leerlauf und Teillastbereich bei Wirkung nur des aus dem Ring bestehenden elastischen Kupplungskörpers einen flachen Anstieg aufweist und diese Kurve in einen progressiv ansteigenden Ast übergeht, sobald sich die zweite Gruppe drehsteifer eingestellter elastischer Kupplungskörper zuschaltet.

Vom Grundprinzip der zweistufigen Auslegung her ist die bekannte Kupplung geeignet, durch Bereitstellung der ersten, drehweichen Dämpfungsstufe das Ziel zu erreichen, die entstehenden Geräusche im Leerlauf oder im Teillastbetrieb erheblich zu senken. Der Nachteil der vorbekannten Kupplung besteht in ihrem recht aufwendigen und komplizierten Aufbau. Offensichtlich ist der Gummiring nämlich einerseits mit dem Kupplungsflansch und andererseits mit der Nabe verschraubt. Zum anderen muß der elastische Ringkörper, damit er mit den Kupplungsteilen verschraubt werden kann, mit Anschraubflanschen versehen sein, an die der Ring anvulkanisiert sein muß. Dies macht Herstellung und Montage aufwendig und entsprechend kostspielig.

Der Erfindung liegt folglich die Aufgabe zugrunde, eine zweistufige drehelastische Wellenkupplung der im Oberbegriff des Anspruches 1 vorausgesetzten Art konstruktiv erheblich zu vereinfachen. Ferner wird Wert gelegt auf erhöhte Betriebssicherheit.

Die Erfindung löst diese Aufgabe in erster Linie und im wesentlichen durch die im Kennzeichenteil des Anspruchs 1 angegebenen Merkmale.

Damit entsteht eine im Gesamtaufbau einfache Kupplung, die, - weil sie ohne vulkanisierte elastische Kupplungskörper auskommt - auch sehr betriebssicher ist. Zwar sind Gummirollenkupplungen an sich bekannt. Die Erfindung macht davon jedoch in besonders geschickter Weise Verwendung, indem sie diese optimal in die zweite Kupplungsstufe integriert. Diese Integration bezieht sich sowohl auf die radiale als auch vor allem auf die axiale Zuordnung der beiden Stufen. Während nämlich beim eingangs erörterten Stand der Technik der Gummiring zumindest teilweise axial vor dem Kupplungsflansch angeordnet sein muß, lassen sich nunmehr beide Stufen so integrieren, daß sie keinen Axialversatz aufweisen, vielmehr die eine Stufe von der anderen axial überdeckt ist. Dies führt in vorteilhafter Weise auch zu einer axial sehr schmal bauenden Kupplungseinheit.

Bei der drehelastischen Wellenkupplung nach der Erfindung berühren einander fast ausschließlich Gummi- und Metallteile, aber keine Metallteile untereinander. Vermieden wird damit auch der bei wechselnden Kräften gefürchtete Passungsrost zwischen einander berührenden Metallteilen. Die Kupplung ist in höchstem Maße verschleißfest und wartungsfrei.

Die Umrisse von Nabe und Kupplungsflansch-Ausnehmung sind vorzugsweise von regelmäßigen vierseitigen Polygonen definiert.

Eine besonders geschickte Ausgestaltung ist dann gegeben, wenn die Kupplungsflansch-Ausnehmung einerseits und die Längsausnehmungen andererseits jeweils von - relativ dünnen - Wandabschnitten umgrenzt bzw. abgegrenzt sind, wobei jeweils eine Polygonecke in radialer Flucht zu einem zwei Längsausnehmungen des Kupplungsflansches trennenden Wandabschnitt angeordnet ist. Hierdurch wird eine skelettartige Leichtbauweise der Kupplung, insbesondere des Kupplungsflansches erreicht mit durchgehend fast konstant auslegbaren Wandstärken, womit sich die Herstellung des formlich komplexen Kupplungsflansches als Gußteil aus Metall oder Kunststoff, insbesondere glasfaserverstärktem Kunststoff, besonders empfiehlt.

Weitere vorteilhafte Merkmale und zweckmäßige weitere Ausgestaltungen des Gegenstandes der Erfindung sind in den übrigen Unteransprüchen angegeben und verstehen sich auch aus der nachfolgenden Erläuterung mehrerer Ausführungsbeispiele anhand der beiliegenden Zeichnungen. In den Zeichnungen zeigen:
- Fig. 1: einen radialen Halbschnitt durch eine Wellenkupplung entsprechend einer ersten Ausführungsform im lastfreien Zustand,
- Fig. 2: eine Darstellung derselben Kupplung, nunmehr jedoch drehmomentbelastet,
- Fig. 3: eine gegenüber der Ausführung nach den Fig. 1 und 2 geringfügig abgewandelte Ausführungsform,
- Fig. 4: einen Radialschnitt entsprechend den Schnittangaben IV-IV in den Fig. 1 bis 3,
- Fig. 5 und 6: Quer- und Längsschnitt einer alternativen Kupplungsbauform,
- Fig. 7 und 8: entsprechende Darstellungen einer weiteren Ausgestaltung,
- Fig. 9: einen Halbquerschnitt durch eine Anordnung mit zweigeteilter Nabe,
- Fig. 10: einen Längsschnitt zu Fig. 9,
- Fig. 11: einen Schnitt entsprechend Fig. 9, jedoch in demontiertem Zustand, und
- Fig. 12: eine Formvariante bezüglich der polygonalen Ausgestaltung von Nabe und Kupplungsflansch-Ausnehmung.

Jede Kupplung umfaßt zunächst einen Kupplungsflansch 10, der der Antriebsseite zugeordnet ist, und eine abtriebsseitig mit einer Welle 11 z.B. eines Getriebes zu verbindende Nabe. Der Kupplungsflansch 10 weist eine zentrale Ausnehmung 13 auf mit einem polygonalen Umriß 14. Die Nabe 12 weist ebenfalls einen entsprechenden polygonalen Umriß 15 auf, jedoch mit geringeren Kantenlängen und somit kleinerem Durchmesser.

Zwischen dem äußeren Umriß 15 der Nabe 12 und dem inneren Umfang 14 der Kupplungsflansch-Ausnehmung 13 sind stab- bzw. walzenförmige gummielastische Körper 16 eingesetzt, und zwar in die Freiräume, die sich ergeben, wenn Nabe 12 und Kupplungsflansch-Ausnehmung 13, und zwar beim dargestellten vierseitigen Polygonal um exakt 45°, umfangsversetzt zueinander angeordnet sind. Die gummielastischen Körper 13 sind unter erheblicher radialer Vorspannung vor den Außenflächen 15 der Nabe 12 in die Kupplungsflansch-Ausnehmung 13 eingebracht. Dies geschieht mittels besonderer Einrichtungen werkseitig. Danach ist die Anordnung im praktischen Betrieb unlösbar.

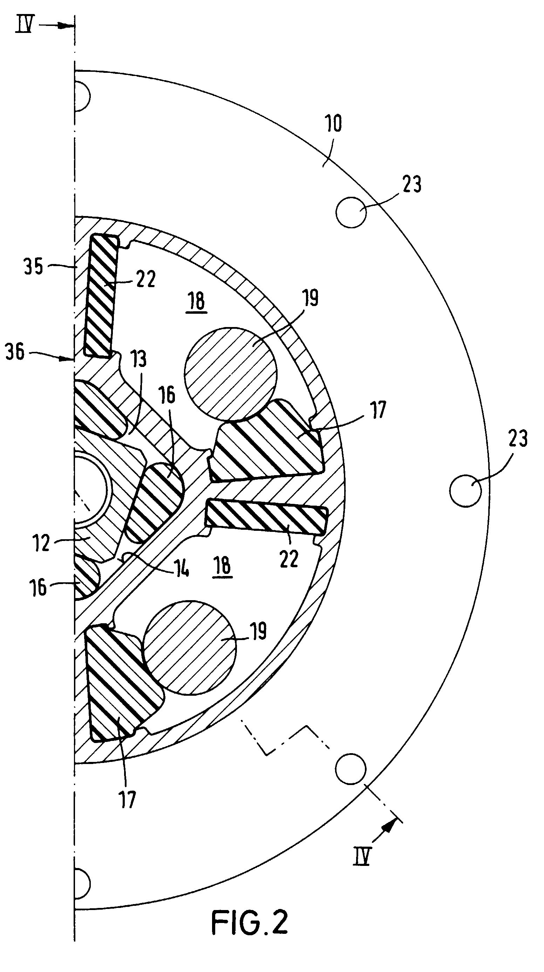

Die beim Ausführungsbeispiel vier elastischen Kupplungskörper 16 bilden eine erste Gruppe und ersetzen in ihrer Funktion den Gummiring des eingangs geschilderten Standes der Technik. Wird nun auf den als Antriebsflansch dienenden Kupplungsflansch 10 ein Drehmoment in Umfangsrichtung U eingeleitet, verlagert sich der Kupplungsflansch 10 in dieser Drehrichtung relativ zur Nabe 12, wobei die gummielastischen Elemente 16 wie Torsionsfedern wirken. Dieser Zustand ist in Fig. 2 dargestellt, in der aus Gründen vereinfachter Darstellung nicht der Umfangsversatz des Kupplungsflansches gegenüber der Nabe, sondern deren entgegengesetzte Verdrehung dargestellt ist. Bei kleinen, dem Leerlauf oder geringer Teillast des Antriebs entsprechenden Drehmomenten erfolgt die Drehmomentübertragung vom Kupplungsflansch 10 allein über die gummielastischen Elemente 16 auf die Nabe 12 und die damit gekuppelte Welle 11. Diese erste Kupplungsstufe mit drehweichen Gummielementen 16 ist somit in der Lage, Drehschwingungen bis zu einem gewissen Grad allein zu dämpfen.

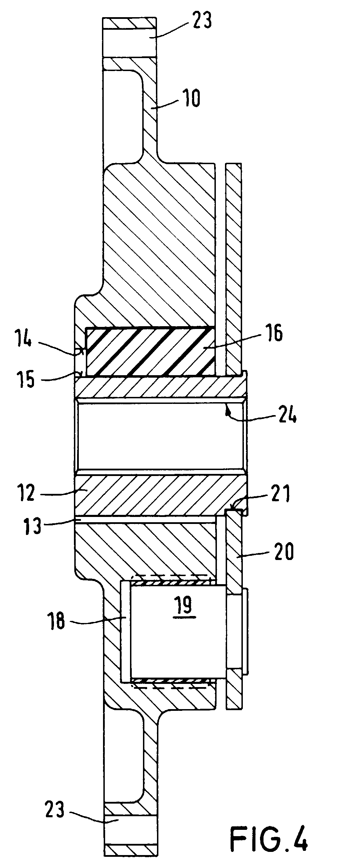

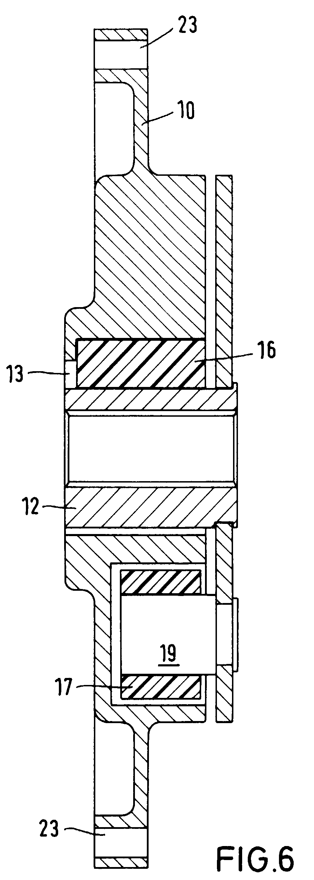

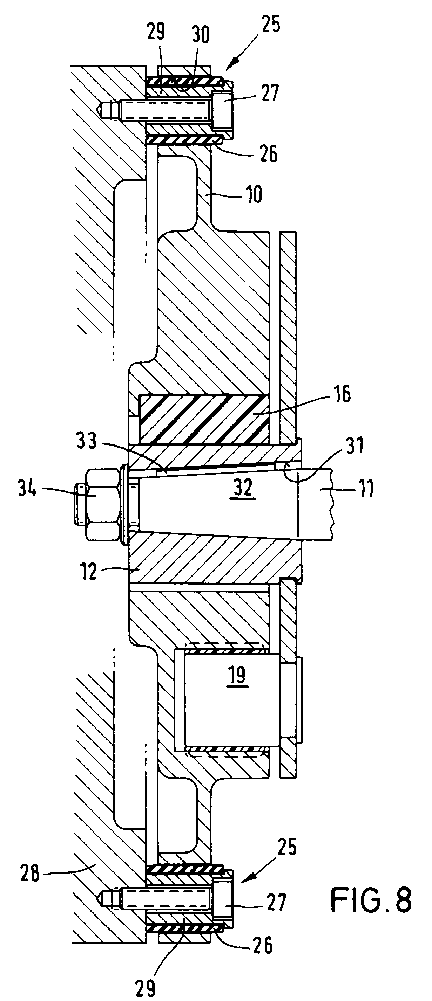

Bei größeren Drehmomenten und Schwingungsamplituden gelangt eine zweite Gruppe gummielastischer Kupplungselemente 17 in den Kraftfluß. Diese gummielastischen Körper 17 sind jeweils an den entgegen der Umfangsdrehrichtung U liegenden Enden von Umfangsausnehmungen 18 angebracht, die radial außerhalb der zentralen Kupplungsflansch-Ausnehmung, diese rings umgebend, im Kupplungsflansch angeordnet sind. Über diese gummielastischen Kupplungskörper 17, die den Anschlag von Klauen 19 dämpfen, die in Axialrichtung in die Umfangs-Aussparungen 18 eingreifen und mit einem Ende fest an einem scheibenförmigen, sekundären Kraftübertragungsglied 20 befestigt sind, erfolgt dann die Kraftübertragung vom Kupplungsflansch 10 zur Nabe 12. Das sekundäre Kraftübertragungselement 20 ist wiederum drehfest mit der Nabe 12 verbunden (vgl. z.B. Fig. 4). Die jeweilige Verbindung sowohl der Klauen 19 mit dem Kraftübertragungsglied 20 als auch dessen Verbindung mit der Nabe 12 geschieht formschlüssig und mittels Vernietung bzw. Verstemmung. Auch dies ist aus Fig. 4 wie auch aus den Fig. 6 und 8 ersichtlich. Da die Nabe 12 einen von einem Kreis abweichenden Umfang besitzt, brauchen hier keine besonderen Formschlußmaßnahmen getroffen zu werden; es genügt ein entsprechend polygonaler Durchbruch 21 in dem Kraftübertragungsglied 20.

Solange Kupplungsflansch 10 und Nabe 12 im Leerlauf oder unteren Teillastbereich in Umfangsrichtung gegeneinander oszillieren, wirken - wie oben erwähnt - allein die gummielastischen Elemente 16 der ersten Gruppe schwingungsdämpfend. Erreicht jedoch die Oszillation eine größere Amplitude bei steigenden Drehzahlen und Drehmomenten, werden mit zunehmendem Umfangsversatz der Kupplungsteile 10 und 12 gegeneinander die Klauen 19 in Richtung auf die gummielastischen Elemente 17 der zweiten Gruppe zu bewegt, bis auch diese in den Kraftfluß eingeschaltet sind und nunmehr das Drehmoment drehelastisch auf die Antriebswelle übertragen können. Dieser Zustand ist in Fig. 2 dargestellt.

Um die drehelastischen Fähigkeiten der ersten Kupplungsstufe möglichst weit ausnutzen zu können, ist der in Umfangsrichtung gemessene Freiraum, also der freie Weg Alpha 2, bis eine Klaue 19 am zugehörigen elastischen Kupplungselement 17 der zweiten Gruppe anschlagen kann, größer als der entsprechende rückwärtige Freiraum, der mit dem Umfangswinkel Alpha 1 bezeichnet ist. Die rückwärtig erkennbaren, plattenartig flachen elastischen Gummielemente 22 haben grundsätzlich eine andere Funktion als die kissenförmigen gummielastischen Körper 17, denn ihnen obliegt es im wesentlichen, metallische Berührung zu vermeiden und den Anschlag der Klaue 19 zu dämpfen, wenn negative Drehmomente auftreten, was insbesondere bei Resonanzdurchfahrt im Transientbetrieb der Fall sein kann.

Die geschilderte zweistufige drehelastische Wellenkupplung besitzt ersichtlich einen einfachen Aufbau, vermeidet Metall-auf-Metall-Berührung und damit eventuell ansonsten auftretenden Passungsrost und läßt sich fabrikseitig ohne Zuhilfenahme von Schraubfestigungsmitteln montieren. Die elastischen Kupplungskörper 17 und 22 sind einfach in Axialrichtung in Aufnahmetaschen 37 eingesteckt und hierin mittels Kraft- und Formschluß gehalten.

Das drehelastische Verhalten der Kupplung ist vorzüglich: Die erste Stufe unter Vermittlung der elastischen Kupplungskörper 16 ist hochdrehelastisch mit leicht progressiver Kennlinie; die zweite Stufe weist eine stärke Progressivität auf und ist damit zur Übertragung im Bereich zwischen erhöhter Teillast bis zur Vollast bestens geeignet. Die Auslegung ist im wesentlichen so getroffen, daß die erste Stufe etwa zu 10% und die zweite Stufe zu etwa 90%, bezogen auf das Nenndrehmoment der Kupplung, an der Kraftübertragung und Dämpfung beteiligt ist.

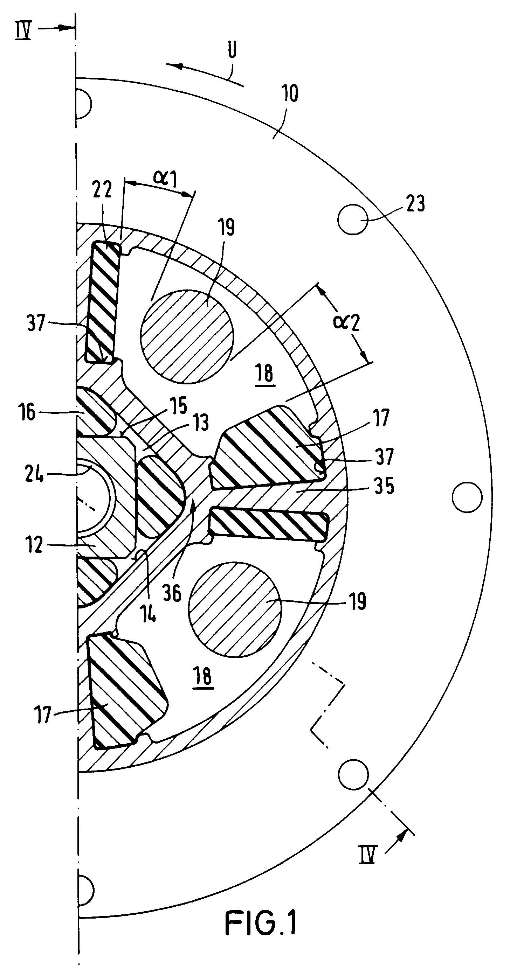

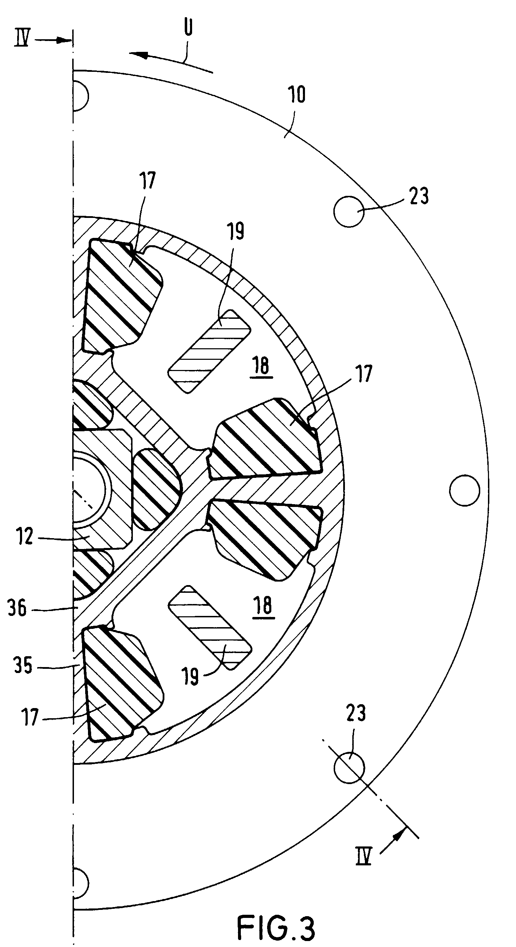

Die Ausführung nach Fig. 3 unterscheidet sich von der anhand von Fig. 1 und 2 erläuterten im wesentlichen dadurch, daß die Klauen 19 hier relativ flache Stege mit etwa rechteckigem Querschnitt sind und keine zylindrischen Bolzen. Daraus ergibt sich als funktionaler Unterschied, daß die Dämpfung bei der Kupplung nach Fig. 1 weicher einsetzt als bei der nach Fig. 3, bei der die Kontaktierung der Klauen 19 mit den gummielastischen Körpern 17 weitestgehend vollflächig erfolgt. Ferner ist die Anordnung so, daß in der unbelasteten Ruhestellung der Kupplung die Klauen 19 umfangsmittig in den Längsausnehmungen 18 angeordnet sind, so daß die Winkelwege in bzw. entgegen der Drehrichtung U bis zum Anschlag an die hier gleichgestalteten elastischen Kupplungskörper 17 identisch sind. Eine solche voll symmetrische Kupplung eignet sich besonders für Anwendungen mit alternierenden Drehrichtungen.

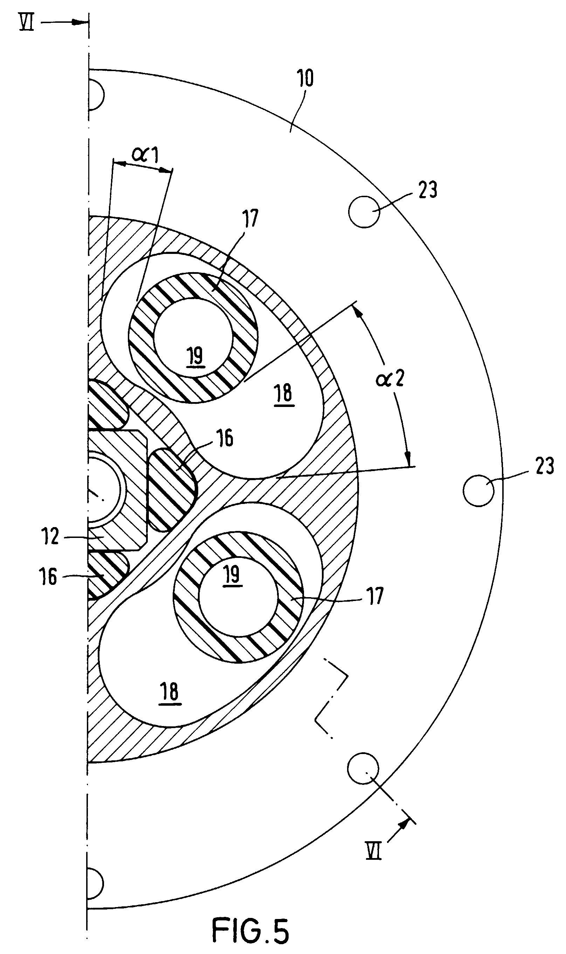

Bei der dritten Ausführungsform entsprechend den Fig. 5 und 6 sind die gummielastischen Kupplungskörper 17 der zweiten Gruppe nicht unmittelbar den Längsausnehmungen 18, sondern den Klauen 19 zugeordnet und als darauf aufgepreßte Hülsenkörper ausgebildet. Die Vororientierung in Umfangsrichtung ist hier in einer mit Fig. 1 vergleichbaren Weise getroffen: siehe Umfangswinkelverhältnis Alpha 2/Alpha 1. Ein Vorteil dieser Ausführungsform besteht in der Einfachheit der Gestaltung einerseits der elastischen Körper 17 und andererseits der einfach umrandeten, etwa nierenförmigen Längsausnehmungen 18.

Die Kupplung der bisher geschilderten Typen ist in Axialrichtung an die entsprechenden Antriebsaggregate ansteckbar. Während der Kupplungsflansch 10 an ein Maschinenteil wie z.B. Schwungrad mittels nicht dargestellter, periphere Bohrungen 23 durchgreifender Schrauben erfolgt, ist die Nabe 12 innen mit einem Evolventen-Vielkeilprofil 24 zum axialen Aufstecken auf eine entsprechend gestaltete Welle 11 ausgebildet.

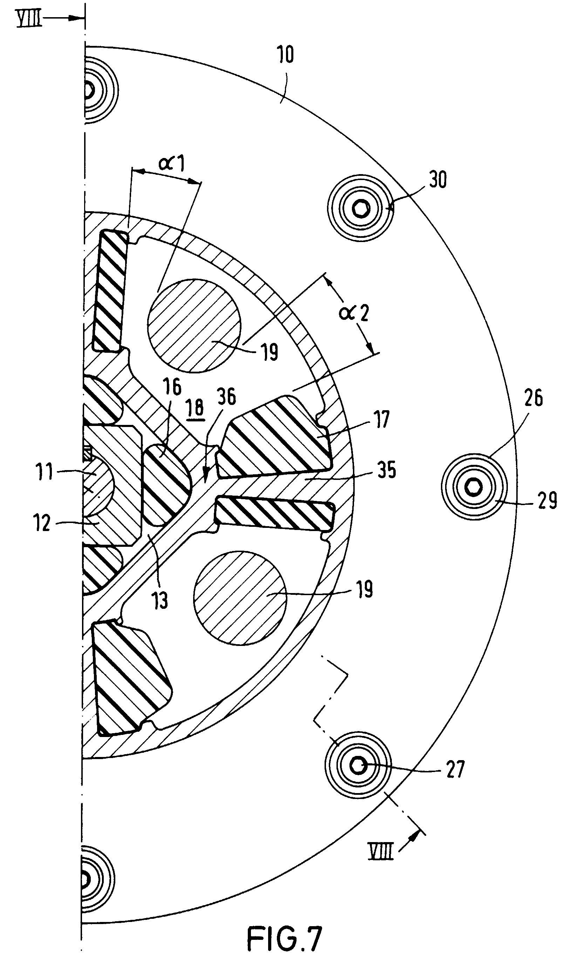

Demgegenüber ist bei der Ausführungsform, wie sie in den Fig. 7 und 8 dargestellt ist, und die im übrigen in der Auslegung dem Ausführungsbeispiel nach den Fig. 1 und 4 entspricht, die axiale Steckbarkeit der Kupplung mit Hilfe einer elastischen Klauenkupplungen 25 realisiert, die jeweils eine mit Gummimanschette 26 sowie Schraube 27 am Schwungradflansch 28 angeschraubte Hülse 29 umfassen. Die Gummimanschetten 26 haben im wesentlichen toleranzausgleichende Funktion, verhindern die Berührung von Metall zu Metall und dienen der unmittelbaren Steckaufnahme der Kupplungsflansch-Bohrungen 30.

Die Aufnahmebohrung 31 der Nabe 12 ist hier konisch ausgebildet und entsprechend weist das Ende der Welle 12 einen Konus 32 auf. Zur Verbindung und Befestigung dienen hier ein Keil 33 und eine Stirnverschraubung 34. Der Vorteil dieser Ausgestaltung ist der einer rasch und einfach durchzuführenden sowie gut zu sichernden Befestigung der Nabe 12 auf der Welle 11.

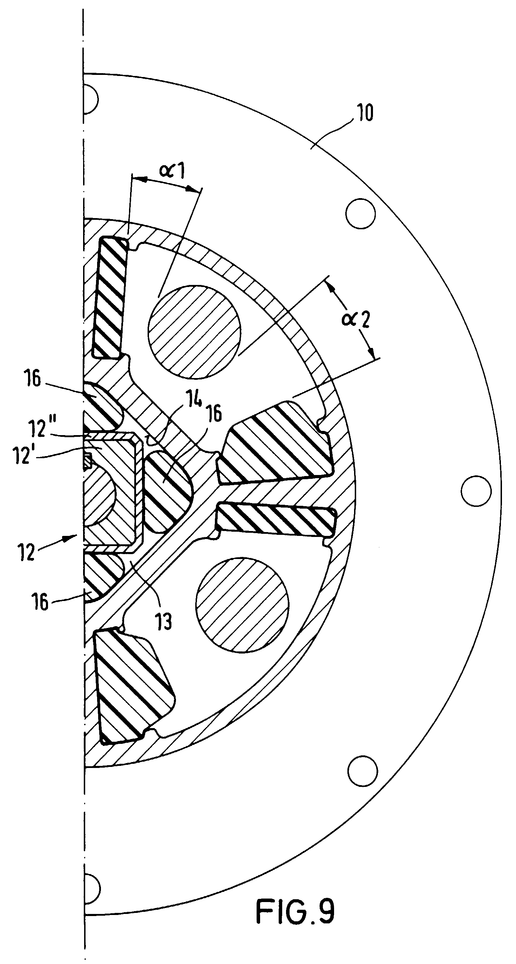

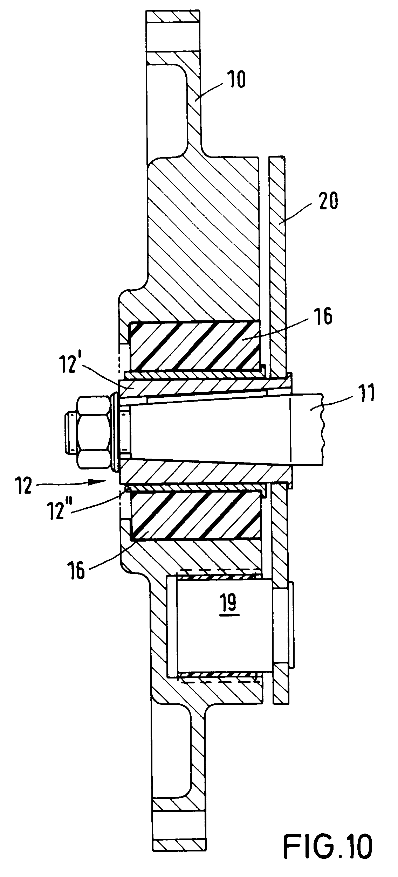

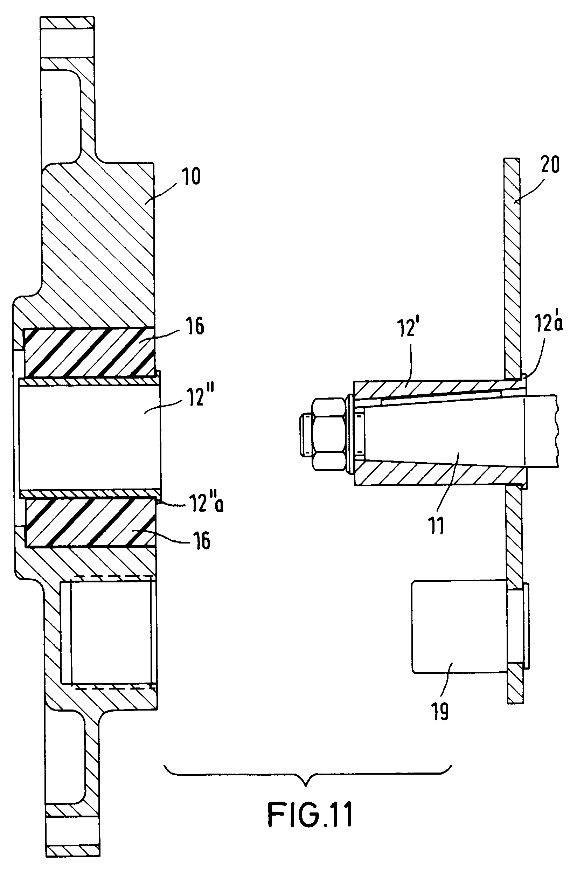

In den Fig. 9 bis 11 ist eine Kupplung dargestellt, deren Nabe 12 in den eigentlichen, mit der Welle 11 zu verbindenden Nabenkörper 12' und eine Hülse 12'' aufgeteilt ist. Diese Hülse 12'' ist Bestandteil der ersten Kupplungsstufe; auf ihr sitzen die gummielastischen Kupplungskörper 16. Hülse 12'' und Nabe 12' sind derart aneinander angepaßt, daß sie sich im Schiebesitz drehfest miteinander steckverbinden lassen. Zur Anschlagbegrenzung sind Nabenkörper 12' und Hülse 12'' jeweils mit einem Stirnbund 12'a und 12''a versehen. Die Montage im Wege einer axialen Steckverbindung vollzieht sich hier unter Bezugnahme auf Fig. 11 so, daß zunächst der Nabenkörper 12', an dem das sekundäre Kraftübertragungsglied 20 mit den Klauen 19 befestigt ist auf das Ende einer Getriebewelle 11 aufgekeilt und die restliche Kupplungsanordnung (linke Hälfte der Fig. 11) motorsetig angebracht wird, indem man den Kupplungsflansch 10 an das Motorschwungrad anschraubt. Sodann wird das Getriebe in Axialrichtung zum Motor und dabei der Nabenkörper 12' in die Hülse 12'' geschoben.

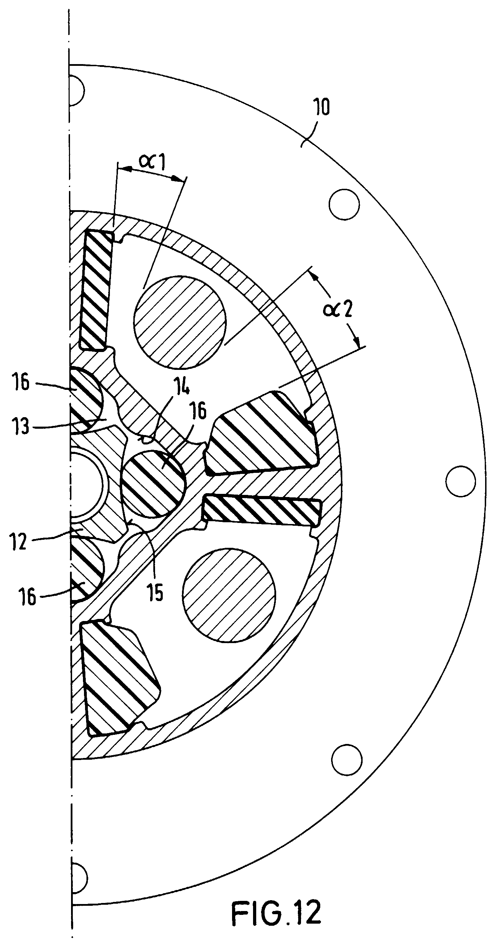

Soweit von "polygonalen Umrissen" die Rede ist, bedeutet dies nicht etwa ausschließlich exakt 'rechteckig'. Auch eine Formgestaltung etwa der Art, wie sie in Fig. 12 außenumfänglich der Nabe 12 und innenumfänglich der Kupplungsflansch-Ausnehmung 13 dargestellt ist, ist im Sinne der Erfindung eine polygonale Anordnung. Wesentlich ist, daß die gummielastischen Körper 16 zwischen der Nabe 12 und der Kupplungsflansch-Ausnehmung derart am Platze gehalten sind, daß sie sich zwar verformen lassen, aber nicht 'wegrollen' können. Deshalb ist es günstig, sie in Eckbereichen der Kupplungsflansch-Ausnehmung zu plazieren und sie nabenseitig Flächen 15 kontaktieren zu lassen. Diese Flächen 15 müssen durchaus nicht eben sein. Sie können z.B. auch entsprechend der Darstellung in Fig. 12 zu den gummielementen 16 hin konkav gestaltet sein. Das hat im übrigen eine steilere Federkennlinie (erhöhte Progressivität der elastischen Dämpfung) zur Folge. Fig. 12 zeigt auch, daß die gummielastischen Kupplungskörper 16 in der Ruhelage hier nur unter recht geringer radialer Vorspannung stehen. Die Dämpfungscharakteristik ist hier also zu Beginn drehweicher und wird dann rascher drehsteifer.

Schließlich sei darauf hingewiesen, daß man das plattenartige sekundäre Kraftübertragungsglied bewußt überdimensionieren, es insbesondere mit einem größeren Durchmesser versieht als notwendig. Infolge einer derartigen Erhöhung des sekundärseitigen Massenträgheitsmoments kann die Resonanz des Kupplungssystems vorteilhaft zu niedrigeren Drehzahlen verlagert werden.

Hervorzuheben ist letztlich noch die bei allen Ausführungen vorherrschende skelettartige Bauweise des Kupplungsflansches 10 und die geschickte An- und Zuordnung der Ausnehmungen 13 und 18 sowie der sie umgrenzenden bzw. gegeneinander abgrenzenden Wände. Erreicht wird dies im wesentlichen dadurch, daß eine der Anzahl der Polygonseiten von Nabe 12 und Kupplungsflansch-Ausnehmung 13 entsprechende Zahl von Umfangsausnehmungen 18 vorgesehen sind und die die Umfangsaussparungen 18 unterteilenden Trennwände 35 in radialer Flucht zu den Polygonecken 36 angeordnet sind. Dadurch lassen sich alle Materialquerschnitte in günstiger Weise annähernd gleich dimensionieren.

## Patentansprüche

1. Zweistufige drehelastische Wellenkupplung für insbesondere Bootsantriebe, im wesentlichen bestehend aus einem antriebsseitig anzuordnenden Kupplungsflansch (10) und einer abtriebsseitig anzuordnenden, axial in eine zentrale Ausnehmung (13) des Kupplungsflansches (10) eingreifenden Nabe (12), einem drehfest mit der Nabe (12) verbundenen sekundären Kraftübertragungsglied (20) mit achsparallel in sich in Umfangsrichtung erstreckende Längsausnehmungen (18) des Kupplungsflansches (10) eintauchenden Klauen (19), und mit zwei Gruppen von elastischen Kupplungselementen (16; 17), von denen die erste, mindestens ein elastisches Element (16) aufweisende Gruppe zwischen dem Kupplungsflansch (10) und der Nabe (12) angeordnet ist und die zweite Gruppe den Längsausnehmungen (18) im Kupplungsflansch (10) zugeordnet ist, denen die Klauen (19) in Umfangsrichtung umfangsbeweglich zugeordnet sind, wobei die erste Gruppe von elastischen Kupplungskörpern (16) drehweicher abgestimmt ist als die zweite Gruppe und die Kraftübertragung bei geringem Drehmoment bzw. Leerlauf oder geringer Teillast vom Kupplungsflansch (10) ausschließlich über die erste Gruppe elastischer Kupplungskörper (16) auf die Nabe (12) übertragen wird und erst bei größerer Teillast bis Vollast bei höherem Drehmoment die zweite Gruppe drehsteifer eingestellter elastischer Kupplungskörper (17) selbsttätig in die Kraftübertragung eingeschaltet wird, gekennzeichnet durch Ausbildung der ersten elastischen Kupplungsstufe nach Art einer an sich bekannten Gummirollenkupplung mit zwischen der Nabe (12) und einem äußeren Polygon (14) gelagerten stabförmigen, gummielastischen Kupplungskörpern (16), ferner dadurch, daß diejenigen Wandpartien des Kupplungsflansches (10), die die Längsausnehmungen (18) zum Eingriff der Klauen (19) zum Zentrum hin begrenzen, zugleich das äußere Polygon (15) ausbilden und dadurch, daß die elastischen Kupplungskörper (16; 17) beider Gruppen im wesentlichen axialversatzfrei konzentrisch zueinander angeordnet sind.

2. Kupplung nach Anspruch 1, dadurch gekennzeichnet, daß die zentrale Ausnehmung (13) des Kupplungsflansches (10) wie auch die Nabe (12) jeweils einen polygonalen Umriß aufweisen, Nabe (12) und Kupplungsflansch-Ausnehmung (13) mit ihren Konturen umfangsversetzt ineinandergreifen und in den durch den Umfangsversatz geschaffenen Freiräumen zwischen Nabe (12) und Kupplungsflansch-Ausnehmung (13) die elastischen Kupplungskörper (16) der ersten Gruppe, vorzugsweise unter radialer Vorspannung, eingesetzt sind.

3. Kupplung nach Anspruch 1 oder dem folgenden, dadurch gekennzeichnet, daß die Umrisse von Nabe (12) und Kupplungsflansch-Ausnehmung (13) von regelmäßigen vierseitigen Polygonen definiert sind.

4. Kupplung nach Anspruch 1 oder einem der folgenden, dadurch gekennzeichnet, daß die Kupplungsflansch-Ausnehmung (13) einerseits und die Längsausnehmungen (18) andererseits jeweils von - relativ dünnen - Wandabschnitten (35) umgrenzt bzw. abgegrenzt sind, wobei jeweils eine Polygonecke (36) in radialer Flucht zu einem zwei Längsausnehmungen (18) des Kupplungsflansches (10) trennenden Wandabschnitt (35) angeordnet ist.

5. Kupplung nach Anspruch 1 oder einem der folgenden, daß das die in die Längsausnehmungen (18) des Kupplungsflansches (10) eintauchenden Klauen (19) aufweisende sekundäre Kraftübertragungsglied (20) als im wesentlichen flache Scheibe ausgebildet und drehfest unmittelbar mit der Nabe (12) verbunden ist.

6. Kupplung nach Anspruch 5, dadurch gekennzeichnet, daß das sekundäre Kraftübertragungsglied (20) eine im wesentlichen dem polygonalen Umriß der Nabe (12) aufweisende zentrale Aufnahmeausnehmung (21) aufweist und mit der Nabe (12) mittels Verstemmung oder Vernietung verbunden ist.

7. Kupplung nach Anspruch 1 oder einem der folgenden, dadurch gekennzeichnet, daß die elastischen Kupplungskörper (17) der zweiten Gruppe als Hülsen ausgebildet sind, die auf Klauen (19) des mit der Nabe (12) verbundenen sekundären Kraftübertragungsgliedes (20) aufgesteckt sind und mit den Querrändern der Längsausnehmungen (18) zusammenwirken.

8. Kupplung nach Anspruch 1, dadurch gekennzeichnet, daß die elastischen Körper (17; 22) der zweiten Gruppe als kissenartige Formteile ausgebildet und in taschenartigen Aufnahmen (37) im Bereich beider Querränder der Längsausnehmungen (18) eingesteckt gehalten sind.

9. Kupplung nach Anspruch 8, dadurch gekennzeichnet, daß im unbelasteten Zustand der Kupplung die Klauen (19) ihre Ruhelage jeweils etwa mittig zwischen den elastischen Elementen (17,17; 17,22) einnehmen.

10. Kupplung nach Anspruch 1, dadurch gekennzeichnet, daß die in Antriebsdrehrichtung (U) weisenden Kupplungskörper (17) der zweiten Gruppe als kissenartige Formteile und die entgegen der Antriebsdrehrichtung (U) weisenden elastischen Kupplungskörper (22) im wesentlichen nur als plattenhaft flache Anschlagkörper mit langrechteckigem Querschnitt ausgebildet sind.

11. Kupplung nach Anspruch 8 oder 9, dadurch gekennzeichnet, daß im unbelasteten Zustand der Kupplung die Klauen (19) ihre Ruhelage zu den entgegen der Drehrichtung (U) des Kupplungsflansches (10) weisenden Querrändern der Längsausnehmungen (18) bzw. elastischen Kupplungskörpern (17) hin versetzt einnehmen.

12. Kupplung nach Anspruch 1 oder einem der folgenden, dadurch gekennzeichnet, daß die Nabe (12) aufgeteilt ist in einen eigentlichen, mit der Welle (11) fest zu verbindenden Nabenkörper (12') und in eine Hülse (12'') als Bestandteil der ersten elastischen Kupplungsstufe und daß der Nabenkörper (12') mit der Hülse (12'') eine drehfeste, axial gleitfähige Passung nach Art eines Schiebesitzes ausbildet.

13. Kupplung nach Anspruch 12, dadurch gekennzeichnet, daß die Hülse (12'') aus einem Kunststoff wie insbesondere Polyamid besteht.

14. Kupplung nach Anspruch 1 oder einem der folgenden, dadurch gekennzeichnet, daß das sekundäre Kraftübertragungsglied (20) über seine notwendige Festigkeit hinaus überdimensioniert ist zur Bildung einer Schwungmasse mit erhöhtem Massenträgheitsmoment.

## Claims

1. Two-stage, torsionally flexible shaft coupling in particular for boat drives, substantially comprising a coupling flange (10), which is to be disposed at the drive end, and a hub (12) which is to be disposed at the output end and engages axially into a central recess (13) of the coupling flange (10), a secondary power transmission element (20) which is connected non-rotatably to the hub (12) and has claws (19) engaging paraxially into peripherally extending longitudinal recesses (18) of the coupling flange (10), and having two groups of elastic coupling elements (16; 17), of which the first group comprising at least one elastic element (16) is disposed between the coupling flange (10) and the hub (12) and the second group is associated with the longitudinal recesses (18) in the coupling flange (10), with which longitudinal recesses the claws (19) are associated so as to be peripherally movable in peripheral direction, the first group of elastic coupling elements (16) being tuned so as to be torsionally less rigid than the second group and the power transmission at low torque and no load or low partial load being transmitted from the coupling flange (10) exclusively via the first group of elastic coupling elements (16) to the hub (12) and the second group of torsionally stiffer elastic coupling elements (17) being automatically introduced into the power transmission only in the event of higher partial load to full load with higher torque, characterized by construction of the first elastic coupling stage in the manner of a known rubber roller coupling having rod-shaped, rubber-elastic coupling elements (16) supported between the hub (12) and an outer polygon (14), further characterized in that the wall portions of the coupling flange (10), which towards the centre delimit the longitudinal recesses (18) for engagement of the claws (19), simultaneously form the outer polygon (15) and that the elastic coupling elements (16; 17) of both groups are disposed concentrically relative to one another substantially without any axial offset.

2. Coupling according to claim 1, characterized in that the central recess (13) of the coupling flange (10) and the hub (12) in each case have a polygonal contour, hub (12) and coupling flange recess (13) engage one into the other with their contours peripherally offset and the elastic coupling elements (16) of the first group are inserted, preferably under radial initial tension, into the gaps between hub (12) and coupling flange recess (13) which are created by the peripheral offset.

3. Coupling according to claim 1 or the following claim, characterized in that the contours of hub (12) and coupling flange recess (13) are defined by regular, foursided polygons.

4. Coupling according to claim 1 or one of the following, characterized in that the coupling flange recess (13), on the one hand, and the longitudinal recesses (18), on the other hand, are in each case circumscribed or delimited by - relatively thin - wall portions (35), in each case one polygon angle (36) being disposed in radial alignment with a wall portion (35) which separates two longitudinal recesses (18) of the coupling flange (10).

5. Coupling according to claim 1 or one of the following, that the secondary power transmission element (20) having the claws (19) which engage into the longitudinal recesses (18) of the coupling flange (10) takes the form of a substantially flat disk and is non-rotatably connected directly to the hub (12).

6. Coupling according to claim 5, characterized in that the secondary power transmission element (20) has a central location recess (21), which substantially has the polygonal contour of the hub (12), and is connected to the hub (12) by caulking or riveting.

7. Coupling according to claim 1 or one of the following, characterized in that the elastic coupling elements (17) of the second group take the form of sleeves, which are mounted onto claws (19) of the secondary power transmission element (20), which is connected to the hub (12), and cooperate with the transverse edges of the longitudinal recesses (18).

8. Coupling according to claim 1, characterized in that the elastic elements (17; 22) of the second group take the form of cushion-like shaped parts and are inserted and held in pocket-like receivers (37) in the region of both transverse edges of the longitudinal recesses (18).

9. Coupling according to claim 8, characterized in that in the unloaded state of the coupling the claws (19) occupy their position of rest in each case roughly midway between the elastic elements (17, 17; 17, 22).

10. Coupling according to claim 1, characterized in that the coupling elements (17) of the second group, which are directed in driving direction of rotation (U), take the form of cushion-like shaped parts and the elastic coupling elements (22), which are directed counter to driving direction of rotation (U), are substantially only designed as plate-like flat stop bodies having a long rectangular cross section.

11. Coupling according to claim 8 or 9, characterized in that in the unloaded state of the coupling the claws (19) occupy their position of rest, in which they are offset towards the transverse edges, directed counter to the direction of rotation (U) of the coupling flange (10), of the longitudinal recesses (18) and/or elastic coupling elements (17).

12. Coupling according to claim 1 or one of the following, characterized in that the hub (12) is divided into an actual hub body (12'), which is to be firmly connected to the shaft (11), and into a sleeve (12") forming part of the first elastic coupling stage and that the hub body (12') with the sleeve (12") forms a non-rotatable, axially slidable fit in the manner of a close sliding fit.

13. Coupling according to claim 12, characterized in that the sleeve (12") is made of a plastic material such as, in particular, polyamide.

14. Coupling according to claim 1 or one of the following, characterized in that the secondary power transmission element (20) is over-dimensioned beyond its necessary strength in order to form a centrifugal mass with an increased mass moment of inertia.

## Revendications

1. Accouplement élastique en rotation à deux étages pour arbres, en particulier pour entraînements pour bateaux, constitué pour l'essentiel par une bride d'accouplement (10) prévue pour être associée au côté de l'entraînement et par un moyeu (12) qui est prévu pour être associé au côté de la sortie et qui pénètre axialement dans un évidement central (13) de la bride d'accouplement (10), par un organe secondaire de transmission des forces (20) qui est solidaire en rotation du moyeu (12) et qui comprend des tiges (19) pénétrant à axes parallèles dans des évidements longitudinaux (18) de la bride d'accouplement (10), lesquels s'étendent dans la direction du pourtour, et par deux groupes d'éléments d'accouplement élastiques (16 ; 17) parmi lesquels le premier groupe qui comporte au moins un élément élastique (16) est disposé entre la bride d'accouplement (10) et le moyeu (12) et le deuxième groupe est associé aux évidements longitudinaux (18) qui sont ménagés dans la bride d'accouplement (10) et auxquels les tiges (19) sont associées en pouvant se déplacer dans la direction du pourtour, cependant que le premier groupe de corps d'accouplement élastiques (16) est moins dur en rotation que le deuxième groupe, que, dans le cas d'un couple faible ou d'une marche à vide, respectivement, ou d'une charge partielle faible, la transmission des forces de la bride d'accouplement (10) au moyeu (12) a lieu exclusivement par l'intermédiaire du premier groupe de corps d'accouplement élastiques (16), et que c'est seulement dans le cas d'une charge allant d'une charge partielle très importante à la pleine charge avec un couple très élevé que le deuxième groupe de corps d'accouplement élastiques (17) qui sont plus durs en rotation est introduit automatiquement dans la transmission des forces, caractérisé par le fait que le premier étage d'accouplement élastique est réalisé à la manière d'un accouplement à rouleaux en caoutchouc qui est connu en lui-même et qui comprend des corps d'accouplement (16) élastiques comme du caoutchouc et en forme de tige, lesquels sont montés entre le moyeu (12) et un polygone intérieur (14), et en outre par le fait que les parties de paroi de la bride d'accouplement (10) qui délimitent vers le centre les évidements longitudinaux (18) en vue de la venue en prise des tiges (19) constituent en même temps le polygone extérieur (15), et par le fait que les corps d'accouplement élastiques (16 ; 17) des deux groupes sont disposés les uns par rapport aux autres en étant pour l'essentiel coaxiaux et sans décalage axial.

2. Accouplement selon la revendication 1, caractérisé par le fait que l'évidement central (13) de la bride d'accouplement (10), ainsi que le moyeu (12), présentent à chaque fois un contour polygonal, que le moyeu (12) et l'évidement (13) de la bride d'accouplement pénètrent l'un dans l'autre par leurs contours en étant décalés dans le sens du pourtour, et que les corps d'accouplement élastiques (16) du premier groupe sont insérés, de préférence avec une compression radiale préalable, dans les espaces libres qui sont créés par le décalage du pourtour entre le moyeu (12) et l'évidement (13) de la bride d'accouplement.

3. Accouplement selon la revendication 1 ou la suivante, caractérisé par le fait que les pourtours du moyeu (12) et de l'évidement (13) de la bride d'accouplement sont définis par des polygones réguliers à quatre côtés.

4. Accouplement selon la revendication 1 ou l'une des suivantes, caractérisé par le fait que l'évidement (13) de la bride d'accouplement, d'une part, et les évidements longitudinaux (18), d'autre part, sont chacun limités intérieurement ou extérieurement, respectivement, par des parties de paroi (35) - relativement minces -, un sommet (36) du polygone étant à chaque fois disposé en étant aligné dans le sens radial sur une partie de paroi (35) qui sépare deux évidements longitudinaux (18) de la bride d'accouplement (10).

5. Accouplement selon la revendication 1 ou l'une des suivantes, caractérisé par le fait que l'organe secondaire de transmission des forces (20) qui présente les tiges (19) pénétrant dans les évidements longitudinaux (18) de la bride d'accouplement (10) est réalisé sous la forme d'un disque, plat pour l'essentiel, et qu'il est directement solidaire en rotation du moyeu (12).

6. Accouplement selon la revendication 5, caractérisé par le fait que l'organe secondaire de transmission des forces (20) comporte un évidement central formant logement (21) qui présente pour l'essentiel le contour polygonal du moyeu (12), et qu'il est relié au moyeu (12) par matage ou par rivetage.

7. Accouplement selon la revendication 1 ou l'une des suivantes, caractérisé par le fait que les corps d'accouplement élastiques (17) du deuxième groupe sont réalisés sous la forme de manchons qui sont enfoncés sur des tiges (19) de l'organe secondaire de transmission des forces (20), celui-ci étant relié au moyeu (12), et qui coopèrent avec les bords transversaux des évidements longitudinaux (18).

8. Accouplement selon la revendication 1, caractérisé par le fait que les corps élastiques (17 ; 22) du deuxième groupe sont réalisés sous la forme de pièces moulées analogues à des coussins, et qu'ils sont maintenus enfoncés dans des logements en forme de poches (37) ménagés dans la région des deux bords transversaux des évidements longitudinaux (18).

9. Accouplement selon la revendication 8, caractérisé par le fait que, dans l'état où l'accouplement n'est pas chargé, les tiges (19) prennent à chaque fois leur position de repos à peu près au milieu des éléments élastiques (17, 17 ; 17, 22).

10. Accouplement selon la revendication 1, caractérisé par le fait que les corps d'accouplement (17) du deuxième groupe qui sont dirigés vers la direction de rotation (U) de l'entraînement sont réalisés sous la forme de pièces moulées analogues à des coussins, et que les corps d'accouplement élastiques (22) qui sont dirigés à l'opposé de la direction de rotation (U) de l'entraînement sont réalisés seulement, pour l'essentiel, sous la forme de corps de butée plats analogues à des plaques dont la section transversale est en forme de rectangle allongé.

11. Accouplement selon la revendication 8 ou 9, caractérisé par le fait que, dans l'état où l'accouplement n'est pas chargé, les tiges (19) prennent leur position de repos en étant décalées vers les bords transversaux des évidements longitudinaux (18) qui sont dirigés à l'opposé de la direction de rotation (U) de la bride d'accouplement (10) ou, respectivement, vers les corps d'accouplement élastiques (17).

12. Accouplement selon la revendication 1 ou l'une des suivantes, caractérisé par le fait que le moyeu (12) est divisé en un corps de moyeu proprement dit (12') qui est destiné à être rendu solidaire de l'arbre (11) et en un manchon (12") qui est un élément constitutif du premier étage d'accouplement élastique, et par le fait que le corps de moyeu (12') forme avec le manchon (12") un ajustement fixe en rotation qui est susceptible de glisser axialement à la manière d'un siège coulissant.

13. Accouplement selon la revendication 12, caractérisé par le fait que le manchon (12") est constitué par une matière plastique comme en particulier du polyamide.

14. Accouplement selon la revendication 1 ou l'une des suivantes, caractérisé par le fait que l'organe secondaire de transmission des forces (20) est surdimensionné par rapport à ce qui est nécessaire pour sa solidité, en vue de former une masse d'inertie dont le couple d'inertie est plus élevé.
